# EUROPEAN PATENT APPLICATION

(11) **EP 1 981 303 A1**
(43) Date of publication of application: **15.10.2008**
(21) Application number: 07713680.2
(22) Date of filing: 23.01.2007
(51) Int. Cl.: H04Q 7/38, H04B 7/26, H04Q 7/36

(54) **BASE STATION AND COMMUNICATION SYSTEM**

(30) Priority: 06.02.2006 JP 2006029055
(71) Applicant: MATSUSHITA ELECTRIC INDUSTRIAL CO., LTD., Osaka 571-8501 (JP)
(72) Inventor: YAMAZAKI, Junya c/o Matsushita El.Ind.Co.Ltd., 2-1-61, Shiromi, Chuo-ku, Osaka 540-6207 (JP); HOSHINO, Masayuki c/o Matsushita El.Ind.Co.Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2007/050988
(87) International publication number: WO 2007/091420

(57) **Abstract**

Provided are a communication system and a base station capable of preventing interference between signals and improving the throughput. A base station device (100) includes: a user quantity monitoring unit (130) for monitoring the number of terminals (users) existing in a cell of the local device; a RACH control unit (140) for transmitting control information (frame type identifier) controlling the frame type of RACH corresponding to the number of terminals; and an RF transmission unit (165) for transmitting the control information to the terminals. The RACH control unit (140) performs control in such a way that as the number of terminals increases, the control information amount contained in the frame of the frame type corresponding to the number decreases. Thus, in accordance with the number of users, the control information data amount is reduced and it is possible to transmit a short frame. Even if the number of users increase, it is possible to reduce the possibility of frame conflict in the RACH, thereby improving the throughput.

## Description

### Technical Field

The present invention relates to a communication system having a base station and a plurality of user terminal apparatuses that perform communication with this base station by radio, and a base station.

### Background Art

In third-generation cellular communications, the downlink access control method employs central control whereby a base station controls many communication terminal apparatuses. A base station uses a "proportional fairness" or "MaxCIR" scheduler, performs access management for each communication terminal apparatus, and performs efficient intra-cell communication terminal apparatus accommodation and control information assignment.

In an uplink, since a communication terminal apparatus cannot determine at what timing another communication terminal apparatus starts uplink transmission, signaling (connection reservation) by means of a Slotted-ALOHA method is used whereby uplink transmission is started randomly in accordance with frame timing.

In the Slotted-ALOHA method, when communication terminal apparatuses start transmission using the same radio resource (time, frequency, space, code, etc.), conflict occurs and interference is caused for the respective communications. If uplink information does not reach a base station due to conflict or an environmental cause, a communication terminal apparatus performs random access to the uplink again using a back-off timer (see Patent Document 1).
Patent Document 1: Japanese Patent Laid-Open No.3016718

### Disclosure of Invention

### Problems to be Solved by the Invention

However, a problem with the conventional technology is that, when the number of users (the number of communication terminal apparatuses) accommodated by a base station becomes greater than or equal to a predetermined value, the possibility of communication terminal apparatuses performing transmission using the same radio resources increases, and therefore throughput declines due to interference between their signals.

It is an object of the present invention to provide a communication system and base station capable of preventing interference between signals and improving throughput.

### Means for Solving the Problems

A base station of the present invention employs a configuration having: a terminal quantity monitoring section that monitors the number of terminals existing in a cell of the local apparatus; a RACH control section that sends control information controlling the RACH frame type corresponding to the number of terminals; and a transmitting section that transmits the control information to the terminals.

A communication system of the present invention is provided with a base station and a plurality of terminals that perform radio communication with that base station, and employs a configuration wherein the base station has: a terminal quantity monitoring section that monitors the number of terminals existing in a cell of the local apparatus; a RACH control section that sends control information controlling the RACH frame type corresponding to the number of terminals; and a transmitting section that transmits the control information to the terminals; and the terminal has a RACH transmission control section that controls the frame type of a RACH transmit frame according to the control information.

### Advantageous Effect of the Invention

The present invention enables interference between signals to be prevented and throughput to be improved.

### Brief Description of Drawings

FIG. is a block diagram showing the configuration of a base station apparatus according to Embodiment 1 of the present invention;
FIG. 2 is a block diagram showing the configuration of a user terminal apparatus according to Embodiment 1;
FIG. 3 is a drawing showing the contents of control information contained in a RACH frame;
FIG. 4 is a drawing showing an example of a RACH frame after the control information amount has been changed;
FIG.5 is a block diagram showing the configuration of a base station apparatus according to Embodiment 2 ;
FIG.6 is a block diagram showing the configuration of a user terminal apparatus according to Embodiment 2 ;
FIG. 7 is a drawing showing a state in which a PRACH preamble is being transmitted controlled by preamble control information; and

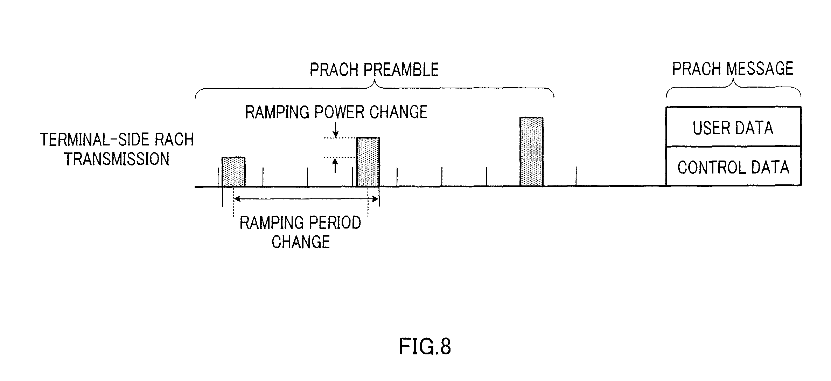

FIG.8 is a drawing showing a state after a ratio that increases the transmission period and power has been changed by means of preamble control information from the state in FIG. 7.

### Best Mode for Carrying Out the Invention

Embodiments of the present invention will now be described in detail with reference to the accompanying drawings.

### (Embodiment 1)

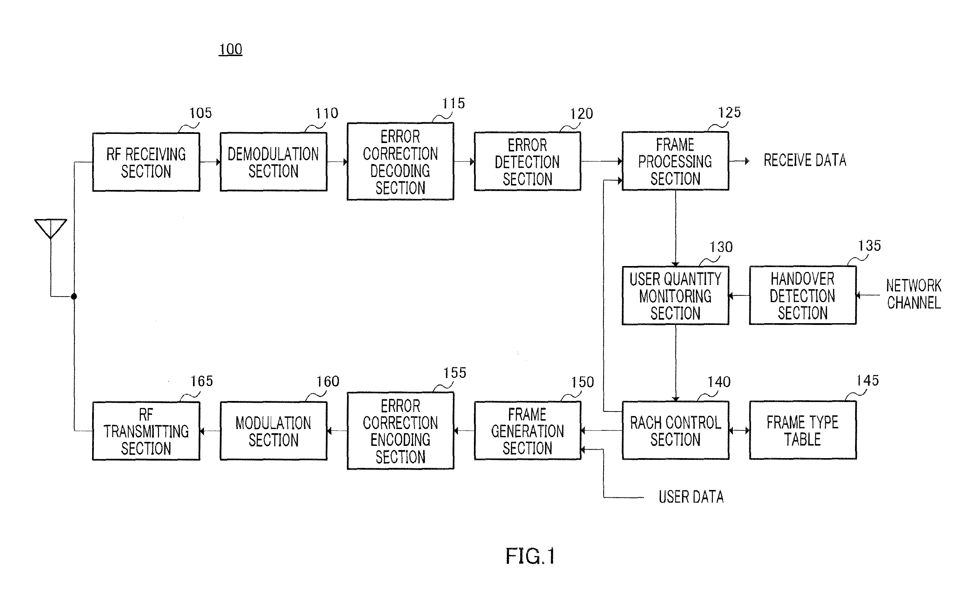

As shown in FIG.1, base station apparatus 100 of this embodiment has RF receiving section 105, demodulation section 110, error correction decoding section 115, error detection section 120, frame processing section 125, user quantity monitoring section 130, handover detection section 135, RACH control section 140, frame type table 145, frame generation section 150, error correction encoding section 155, modulation section 160, and RF transmitting section 165.

RF receiving section 105 executes predetermined radio processing (such as down-conversion and A/D conversion) on a received signal received via an antenna, and outputs a post-radio-processing received signal to demodulation section 110.

Demodulation section 110 executes demodulation processing on the post-radio-processing received signal from RF receiving section 105, and outputs the resulting signal to error correction decoding section 115.

Error correction decoding section 115 executes error correction decoding processing on the post-modulation signal, and outputs the resulting signal to error detection section 120.

Error detection section 120 detects whether there is an error for the post-error-correction-decoding signal, and outputs an error-free signal to frame processing section 125.

At the timing at which a received frame type change signal is received, frame processing section 125 switches to a frame processing method for a frame of a type different from the present one. Then frame processing section 125 performs frame processing on the signal from error detection section 120 using the switched-to frame processing method, and outputs the resulting signal as output data.

User quantity monitoring section 130 extracts from the receive data from frame processing section 125 terminal identification information of user terminal apparatus 200 described later herein that transmitted that receive data, and uses this terminal identification information to count the number of users (user terminal apparatuses 200) existing in the cell covered by the local apparatus. If user terminal apparatus 200 moves to another cell through handover, there is a report from a host station via a network channel, and on receiving this report, handover detection section 135 outputs a detection signal to user quantity monitoring section 130, and therefore user quantity monitoring section 130 decrements the user count each time this detection signal is received. If user terminal apparatus 200 enters the cell covered by the local apparatus from another cell through handover, there is a report from the host station, and on receiving this report, handover detection section 135 outputs a detection signal to user quantity monitoring section 130, and therefore user quantity monitoring section 130 increments the user count each time this detection signal is received.

User quantitymonitoring section 130 then outputs the current number of users to RACH control section 140.

RACH control section 140 receives the user count information from user quantity monitoring section 130, searches for a frame type corresponding to the number of users indicated by this user count information in frame type table 145, and acquires that frame type identification information. Then RACH control section 140 outputs the acquired frame type identification information and timing information for changing a transmit frame of user terminal apparatus 200 described later herein to the frame type indicated by that identification information. When a time period corresponding to the above timing information has elapsed since outputting the frame type identification information and the timing information to frame generation section 150, RACH control section 140 outputs the frame type identification information to frame processing section 125.

Frame type table 145 stores a number of users and a frame type corresponding thereto in mutually associated form.

Specifically, frame type table 145 stores numbers of users and frame types corresponding thereto in mutually associated form in such a way that, as the number of users increases, the amount of control information contained in a frame of the frame type corresponding to that number of users decreases. The method of decreasing the amount of control information is described later herein.

Here, user terminal apparatus 200 described later herein receives frame type identification information output by RACH control section 140, and transmits a frame in a RACH (Random Access CHannel) using the frame type corresponding to that frame type identification information. That is to say, the control information data amount decreases according to the number of users, and user terminal apparatus 200 described later herein can transmit a correspondingly shorter frame. Even if the number of users increases, it is possible to reduce the possibility of frame conflict in the RACH, thereby improving throughput.

Frame generation section 150 has user data together with frame type identification information and timing information from RACH control section 140 as input, forms a frame from these items of information, and outputs this frame to error correction encoding section 155.

Error correction encoding section 155 executes error correction encoding processing on the frame generated by frame generation section 150, and outputs the frame to modulation section 160.

Modulation section 160 executes modulation processing on the post-error-correction-encoding frame, and outputs the frame to RF transmitting section 165.

RF transmitting section 165 executes predetermined radio processing (such as D/A conversion and up-conversion) on the post-modulation-processing frame, and transmits the frame via the antenna.

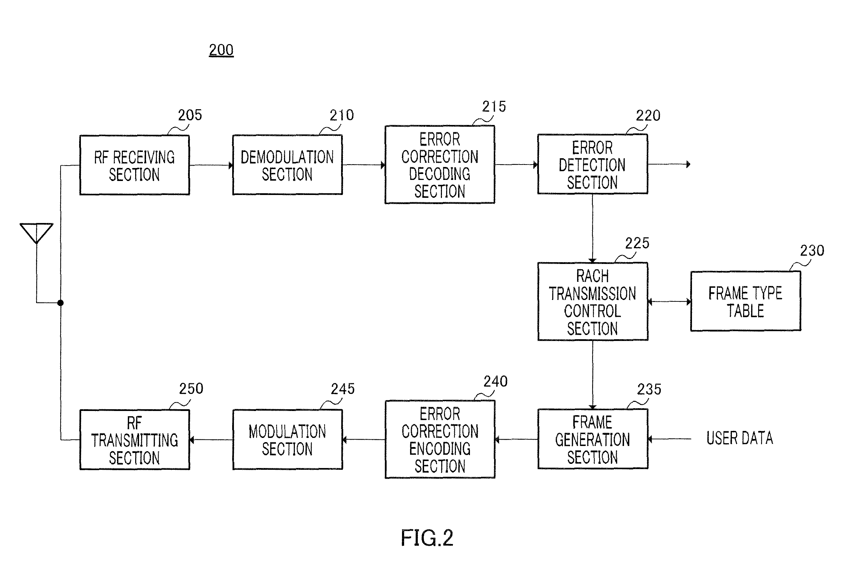

As shown in FIG.2, user terminal apparatus 200 of this embodiment has RF receiving section 205, demodulation section 210, error correction decoding section 215, error detection section 220, RACH transmission control section 225, frame type table 230, frame generation section 235, error correction encoding section 240, modulation section 245, and RF transmitting section 250.

RF receiving section 205 executes predetermined radio processing (such as down-conversion and A/D conversion) on a received signal received via an antenna, and outputs a post-radio-processing received signal to demodulation section 210.

Demodulation section 210 executes demodulation processing on the post-radio-processing received signal from RF receiving section 205, and outputs the resulting signal to error correction decoding section 215.

Error correction decoding section 215 executes error correction decoding processing on the post-modulation signal, and outputs the resulting signal to error detection section 220.

Error detection section 220 detects whether there is an error for the post-error-correction-decoding signal, and outputs an error-free signal.

RACH transmission control section 225 has the signal from error detection section 220 as input, and extracts frame type identification information and timing information from this signal. RACH transmission control section 225 then acquires frame type information corresponding to the frame type identification information from frame type table 230. Then, at the timing indicated by the timing information, RACH transmission control section 225 outputs the acquired frame type information to frame generation section 235 and controls the type of frame in the RACH.

Frame generation section 235 forms a frame from input user data using the frame type corresponding to the latest frame type information received from RACH transmission control section 225. Then frame generation section 235 outputs the formed frame to error correction encoding section 240.

Error correction encoding section 240 executes error correction encoding processing on the frame from frame generation section 235, and outputs the frame to modulation section 245.

Modulation section 245 executes modulation processing on the post-error-correction-encoding-processing frame, and outputs the frame to RF transmitting section 250.

RF transmitting section 250 executes predetermined radio processing (such as D/A conversion and up-conversion) on the post-modulation-processing frame, and transmits the frame via the antenna.

Next, the method of decreasing the amount of control information in a frame will be described.

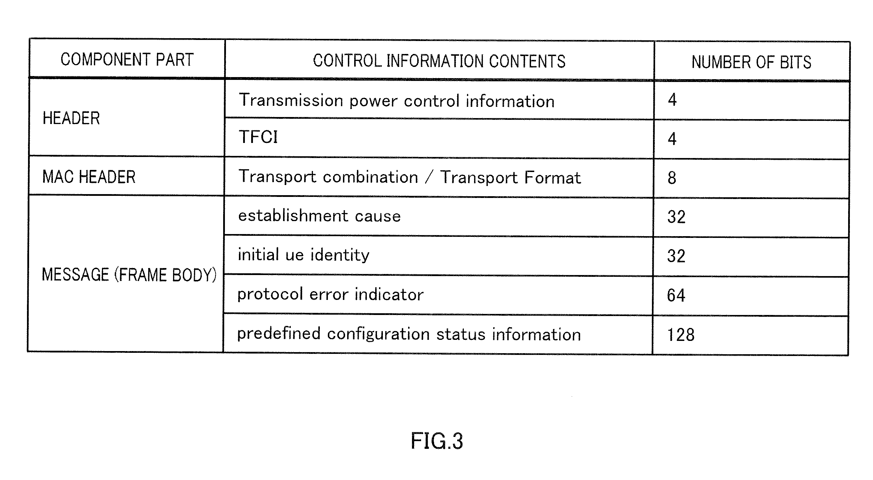

As shown in FIG.3, various kinds of control information are contained in the component parts of a RACH frame.

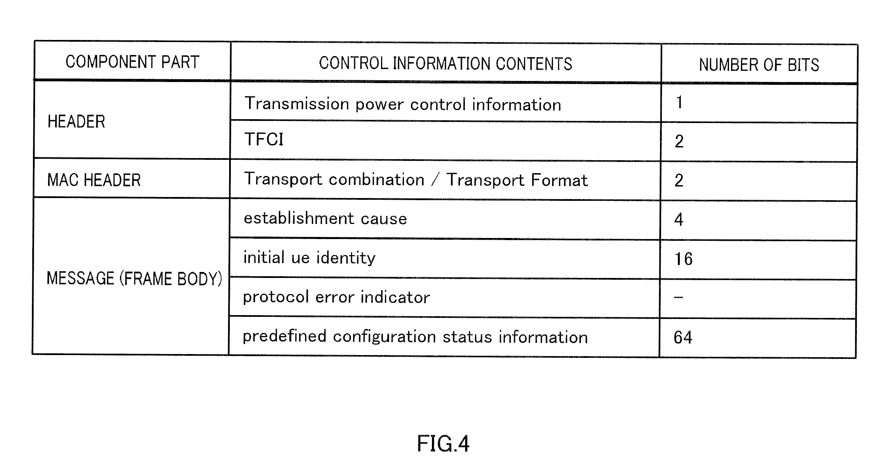

The following is a possible pattern for reducing the amount of control information.
(1) Reduce the number of bits utilized for control of a channel used after the RACH, and more specifically, reduce the number of bits of "TFCI" and "predefined configuration status information".
(2) Reduce the number of bits of transmission power control information when closed loop power control is performed.
(3) Reduce the number of bits of control information (specifically, "protocol error indicator") utilized for error processing, reserved bits (specifically, of parts such as "establishment cause", "initial ue identity", "protocol error indicator", "predefined configuration status information", and so forth), and control information that is for the RACH channel but is not necessarily required for communication (specifically, "establishment cause"). An example of control information in which the number of bits has been reduced based on the above pattern is shown in FIG. 4.

Thus, according to Embodiment 1, base station apparatus 100 is provided with user quantity monitoring section 130 that monitors the number of terminals (users) existing in the cell of the local apparatus, RACH control section 140 that sends out control information (frame type identification information) that controls the RACH frame type, and RF transmitting section 165 that transmits the control information to the terminals.

By means of the control information, RACH control section 140 performs control in such a way that as the number of terminals increases, the amount of control information contained in a frame of the frame type corresponding to that number decreases.

Thus, the control information data amount decreases according to the number of users and a correspondingly shorter frame can be transmitted, and even if the number of users increases, it is possible to reduce the possibility of frame conflict, thereby improving overall system throughput.

### (Embodiment 2)

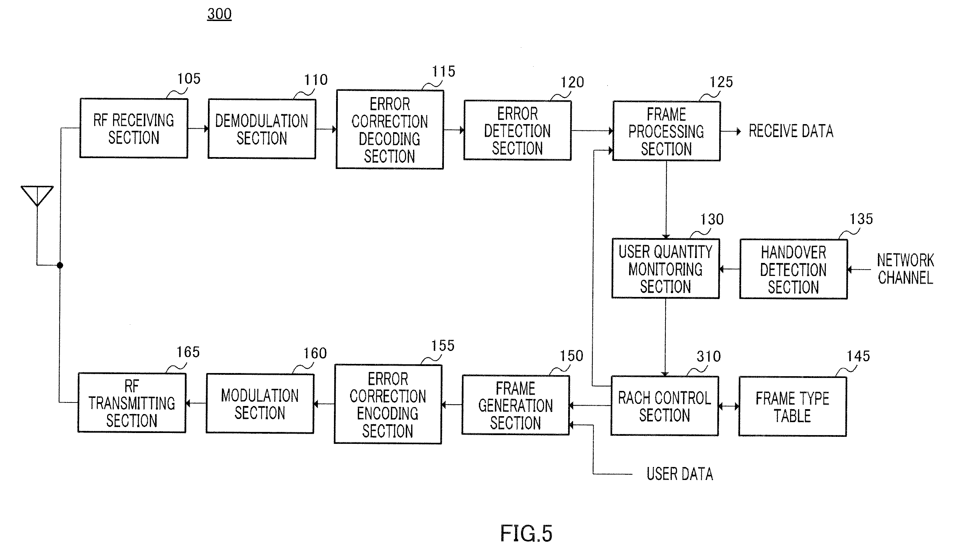

As shown in FIG.5, base station apparatus 300 of Embodiment 2 has RACH control section 310. This RACH control section 310 has the same kind of function as RACH control section 140 of Embodiment 1, and also generates preamble control information with contents in accordance with the number of users from user quantity monitoring section 130, and transmits this information at a fixed period to user terminal apparatuses 400 existing in the cell of the local apparatus, via frame generation section 150, error correction encoding section 155, modulation section 160, and RF transmitting section 165.

This preamble control information contains at least one of a PRACH preamble transmission period (repeated until AICH from base station apparatus 300 is received within a fixed period) and/or a ratio of power this time and last time (which may be hereinafter referred to as "ramping power information").

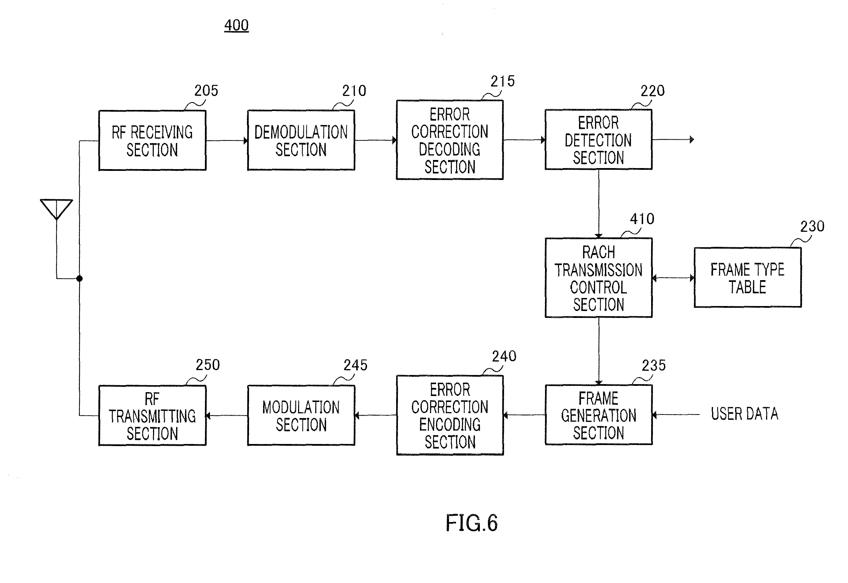

As shown in FiG. 6, user terminal apparatus 400 of Embodiment 2 has RACH transmission control section 410. This RACH transmission control section 410 has the same kind of function as RACH transmission control section 225 of Embodiment 1 , and also transmits a PRACH preamble transmitted before transmitting a PRACH message to base station apparatus 300 in accordance with preamble control information from base station apparatus 300.

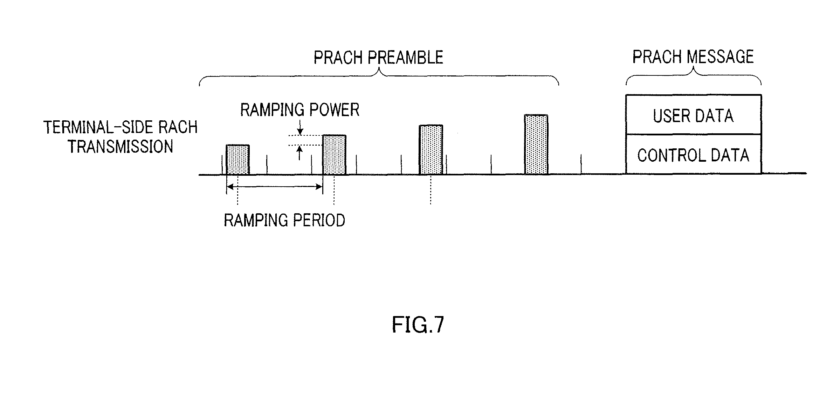

That is to say, since preamble control information contains at least one of the PRACH preamble transmission period and/or ramping power information, as described above, when the transmission period is contained in preamble control information, a PRACH preamble is transmitted at that transmission period, and when ramping power information is contained in preamble control information, a PRACH preamble is transmitted while increasing the power in a ratio in accordance with that ramping power information. FIG. 7 shows a state in which a PRACH preamble is being transmitted controlled by preamble control information at a certain timing. In contrast, FIG. show a state after a ratio that increases the transmission period and power has been changed by means of preamble control information.

Thus, according to Embodiment 2, base station apparatus 300 is provided with user quantity monitoring section 130 that monitors the number of terminals (users) existing in the cell of the local apparatus, RACH control section 320 that sends out control information (frame type identification information) that controls the RACH frame type corresponding to the number of terminals, and RF transmitting section 165 that transmits the control information to the terminals.

RACH control section 310 sends out other control information that controls the RACH preamble transmission period or transmission power ramping according to the number of terminals.

Thus, by lengthening the preamble transmission period according to the number of terminals, even if the number of users increases it is possible to reduce the possibility of frame (preamble) conflict, thereby preventing a decline in throughput.

The disclosure of Japanese Patent Application No. 2006-029055, filed on February 6, 2006, including the specification, drawings and abstract, is incorporated herein by reference in its entirety.

### Industrial Applicability

The present invention has an effect of enabling interference between signals to be prevented and throughput to be improved, and is useful for a base station and communication system.

## Claims

1. A base station comprising:
a terminal quantity monitoring section that monitors a number of terminals existing in a cell of a local apparatus;
a RACH control section that sends control information controlling a RACH frame type corresponding to the number of terminals; and
a transmitting section that transmits the control information to the terminals.

2. The base station according to claim 1, wherein the RACH control section, by means of the control information, performs control in such a way that as the number of terminals increases, an amount of control information contained in a frame of a frame type corresponding to that number decreases.

3. The base station according to claim 1, wherein the RACH control section sends out other control information that controls a RACH preamble transmission period or transmission power ramping according to the number of terminals.

4. A communication system comprising a base station and a plurality of terminals that perform radio communication with the base station, wherein:
the base station has:
a terminal quantity monitoring section that monitors a number of terminals existing in a cell of a local apparatus;
a RACH control section that sends control information controlling a RACH frame type corresponding to the number of terminals; and
a transmitting section that transmits the control information to the terminals, and
the terminal has a RACH transmission control section that controls a frame type of a RACH transmit frame according to the control information.
